Europäisches Patentamt

European Patent Office

Office européen des brevets

(19)

(11) Veröffentlichungsnummer: **0 090 436**
**A2**

# (12) EUROPÄISCHE PATENTANMELDUNG

(21) Anmeldenummer: **83200212.5**

(22) Anmeldetag: **10.02.83**

(51) Int. Cl.³: **F 16 J 15/14, F 16 L 23/00**

(30) Priorität: **25.03.82 CH 1835/82**

(43) Veröffentlichungstag der Anmeldung: **05.10.83**
**Patentblatt 83/40**

(84) Benannte Vertragsstaaten: **CH DE FR LI**

(71) Anmelder: **BBC Aktiengesellschaft Brown, Boveri & Cie.,**
**Haselstrasse, CH-5401 Baden (CH)**

(72) Erfinder: **Becker, Hans, Nuechtalstrasse 18,**
**CH-5415 Nussbaumen (CH)**
Erfinder: **Fehr, Werner, Wattstrasse 20,**
**CH-8307 Effretikon (CH)**

(54) **Flanschdichtung.**

(57) Eine Flanschdichtung mit einem elastischen Dichtelement (1) enthält einen außerhalb des Dichtelementes (1) angeordneten ringförmigen Hohlraum (2), der mit einer Dichtmasse (12) ausgefüllt ist. Die Dichtmasse (12) bildet einen zusätzlichen Dichtungsring, der das Dichtelement (1) und die Dichtflächen (6, 6a) der Flansche (4, 5) schützt und die Dichtigkeit der Flanschverbindung verbessert.

EP 0 090 436 A2

(Ausland)
27/82
Ot/eh

- 1 -

# Flanschdichtung

Die vorliegende Erfindung betrifft eine Flanschdichtung gemäss dem Oberbegriff des Anspruchs 1, ein Verfahren zur Herstellung der Flanschdichtung sowie eine Anwendung des Verfahrens.

Elastisch gedichtete Flanschverbindungen werden in der Technik überall dort angewandt, wo aus vorgefertigten Rohr- oder Gehäuseteilen ein gas- oder flüssigkeitsdichtes Gesamtsystem zusammengesetzt wird, das entweder demontierbar sein soll oder aus konstruktiven Gründen nicht stoffschlüssig verbunden werden kann. Die Teile weisen an den Verbindungsstellen entsprechende Flansche auf, deren Stirnseiten als Dichtflächen ausgebildet sind. Die Dichtflächen sind meistenteils mit Nuten zur Aufnahme der elastischen, überwiegend ringförmigen Dichtelemente versehen. Die Nutabmessungen sind so gewählt, dass das Dichtelement im undeformierten Zustand in definierter Weise über die Nutoberkante herausragt und im deformierten Zustand vollständig von der Nut aufgenommen wird. Die gegenüberliegenden Flansche benachbarter Teile werden durch aussen an den Flanschen angreifende Klammern oder Schraubverbindungen soweit gegeneinandergedrückt, dass die Dichtflächen aneinanderstossen. Das deformierte Dichtelement wird dadurch auf
seinem ganzen Umfang an die Dichtflächen gepresst und dichtet die Flanschverbindung ab.

Aufgrund von Unebenheiten, mechanischen Verspannungen und
Herstellungstoleranzen bilden sich beim Zusammenbau zwischen den Dichtflächen Hohlräume. In die ausserhalb des
Dichtelementes liegenden Hohlräume kann zum Beispiel Feuchtigkeit eindringen und, im Fall metallischer Flansche,
zu Korrosionsschäden an den Dichtflächen führen oder das
Dichtelement selbst nachteilig verändern.

Der vorliegenden Erfindung liegt daher die Aufgabe zugrunde, eine Flanschdichtung zu schaffen, deren Dichtelement
und Dichtflächen keinen schädlichen Umwelteinflüssen ausgesetzt sind. Die Aufgabe wird erfindungsgemäss dadurch
gelöst, dass die Merkmale gemäss dem kennzeichnenden Teil
des Anspruchs 1 vorgesehen sind.

Gemäss einer Ausgestaltung der Erfindung sind bei solchen
Flanschdichtungen, bei denen die Flansche durch eine Schraubverbindung zusammengehalten werden, diejenigen Bohrungshohlräume, die zwischen der Schraubverbindung und den Flanschen unvermeidlich vorhanden sind, durch Kanäle mit dem
Hohlraum zwischen den Dichtflächen verbunden und ebenso
wie dieser mit der Dichtmasse ausgefüllt.

In einem bevorzugten Ausführungsbeispiel verläuft die Bohrung durch einen der Flansche, und die Achse der Bohrung
schliesst mit den Dichtflächen einen Winkel von ungefähr
75° ein. In einem weiteren Ausführungsbeispiel verläuft
die Bohrung parallel zu den Dichtflächen durch einen zwischen den Flanschen liegenden Stützring. In einem anderen
Ausführungsbeispiel ist die Bohrung im Durchmesser abgestuft. Bevorzugt wird auch eine Dichtmasse verwendet, deren Viskosität ausreichend gross ist, um die Hohlräume dauerhaft auszufüllen. Wie die Erfahrung gezeigt hat, ist zu diesem Zweck eine erfindungsgemässe Viskosität $\geq$ 10 (Pa·s) besonders geeignet. In einem weiteren Ausführungsbeispiel ist als Dichtmasse das im Handel befindliche Silastic 738 der Firma Dow Corning vorgesehen.

Das erfindungsgemässe Verfahren zur Herstellung einer Flanschdichtung kann einerseits bei z.B. neu montierten Flanschverbindungen, deren Flansche vorzugsweise aus Metall bestehen, angewendet werden, um Korrosion oder andere durch an den Dichtflächen oder an dem elastischen Dichtelement selbst zu verhindern. In diesem Fall kommt für die Dichtmasse, die als Schutzmittel wirkt, beispielsweise ein Silikonfett in Frage. Andererseits kann es aber auch angewendet werden, um leckgewordene Flanschdichtungen, deren Dichtelement beispielsweise einen Riss aufweist, abzudichten, ohne dass die Verbindung aufgetrennt werden muss.

Die erfindungsgemässe Flanschdichtung hat den Vorteil, dass mit geringem Aufwand die Standfestigkeit von elastisch gedichteten Flanschverbindungen verbessert werden kann. Insbesondere in der Hochspannungstechnik, wo diese Verbindungen bei $SF_6$-isolierten, gekapselten Freiluftanlagen der Witterung ausgesetzt sind, können dadurch erhöhte Anforderungen an die Zuverlässigkeit der Anlagenkomponenten erfüllt werden, ohne dass konstruktive Aenderungen notwendig sind.

Ein anderer Vorteil ergibt sich daraus, dass das Verfahren auch zur Reparatur undichter Flanschverbindungen geeignet ist, deren ursprüngliche, elastische Dichtungen sich nicht ohne grössere Schwierigkeiten auswechseln lassen. Ein weiterer Vorteil hat im Zusammenhang mit der oben erwähnten Hochspannungstechnik besonderes Gewicht: Für $SF_6$-isolierte Komponenten in Hochspannungsanlagen kann der elektrische Uebergangswiderstand zwischen den Flanschen der Flanschverbindung eine für den störungsfreien Betrieb wesentlich Grösse sein. Dieser Widerstand wird in seiner Qualität durch die erfindungsgemässe Flanschdichtung nicht verändert, weil die mechanischen und elektrischen Verhältnisse durch das Herstellungsverfahren nicht verändert werden.

Nachfolgend werden anhand von Zeichnungen Ausführungsbeispiele der Erfindung erläutert.

Dabei zeigt:

Fig. 1    eine Seite des Querschnitts durch eine einfache, elastisch gedichtete Flanschverbindung;

Fig. 2    einen entsprechenden Querschnitt für eine Dichtung mit Zentrierung;

Fig. 3    einen entsprechenden Querschnitt einer speziell in der Hochspannungtechnik verwendeten Flanschverbindung;

Fig. 4    einen Querschnitt durch eine Flanschdichtung gemäss Fig. 1 mit einer entsprechenden Schraubverbindung.

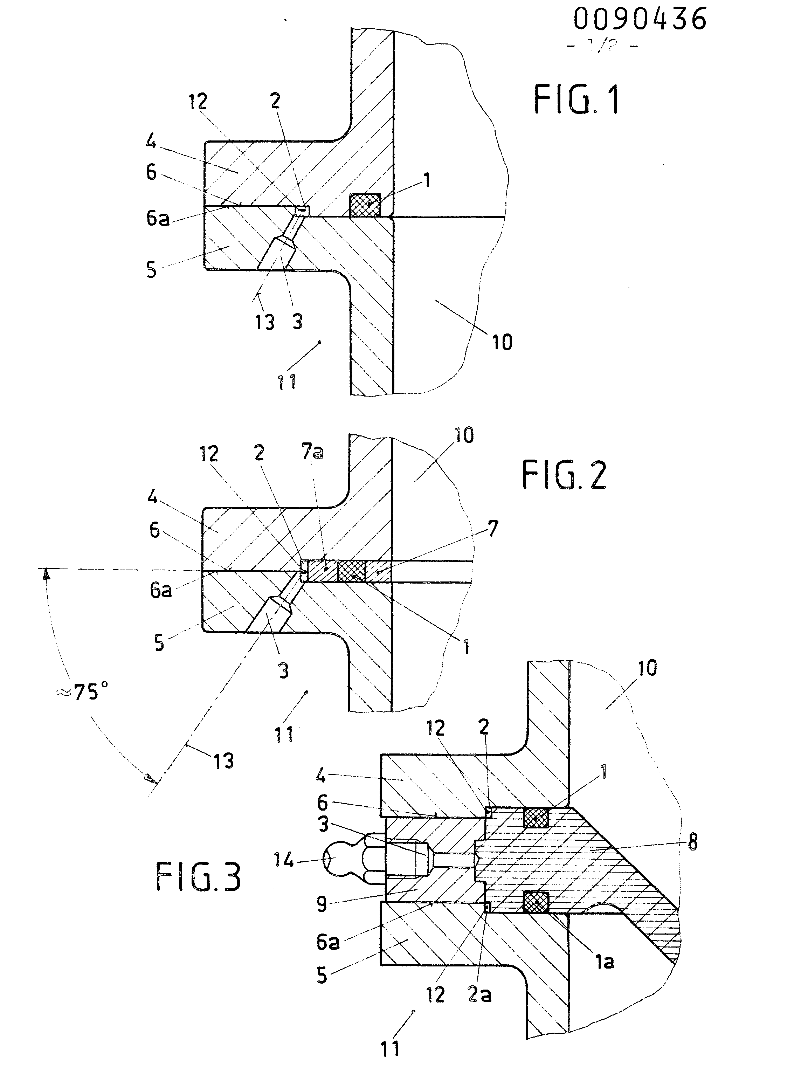

In Fig. 1 ist ausschnittsweise der Querschnitt durch eine einfache, elastische Flanschverbindung dargestellt. Der obere Flansch 4 hat eine Nut, die das deformierte Dichtelement 1 aufnimmt. Der untere Flansch 5 und der obere Flansch 4 stossen mit ihren Dichtflächen 6, 6a aneinander und bilden aufgrund der Bearbeitungstoleranzen beispielsweise den Hohlraum 2. Der Innenraum 10 ist im Normalzustand durch Dichtelement 1 abgedichtet. Erfindungsgemäss ist von aussen beispielsweise mittels einer Bohrlehre mindestens eine Bohrung 3 durch einen der Flansche so ausgeführt, dass der Hohlraum 2 durch die Bohrung 3 mit dem Aussenraum 11 verbunden ist. Die Bohrung ist so beschaffen, dass sie die entsprechend geformte Austrittsöffnung einer

0090436
27/82

Dichtmassenpresse aufnimmt und eine für die auftretenden Drücke hinreichend dichte Verbindung zur Pressapparatur herstellt. Die Bohrung kann entweder vor oder nach dem Zusammenbau der Verbindung ausgeführt werden. Im zusammengebauten Zustand ist mindestens der Hohlraum 2 mit der Dichtmasse 12 ausgefüllt und bildet so einen weiteren Dichtungsring, der das ursprüngliche Dichtelement 1 und die anliegenden Dichtflächen vor äusseren Einflüssen schützt. Darüber hinaus sind mögliche weitere schmale Hohlräume zwischen den Dichtflächen 6, 6a ausgefüllt und damit abgedichtet.

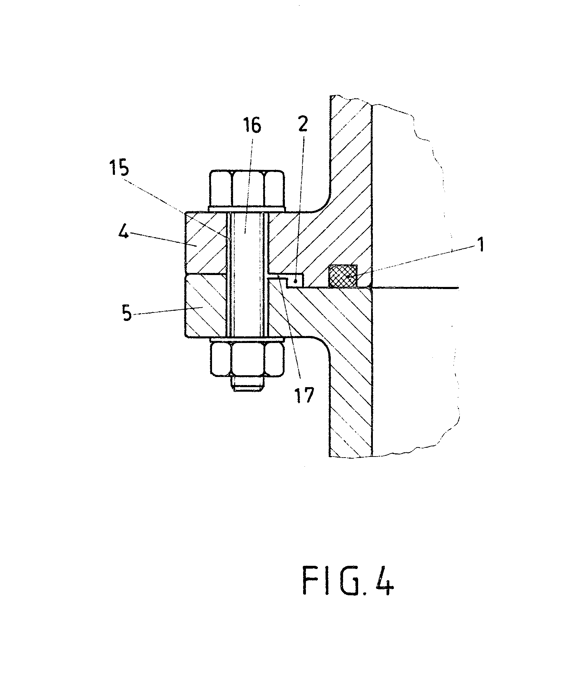

Fig. 4 zeigt eine vergleichbare Flanschdichtung, bei der die beiden Flansche 4 und 5 durch eine Schraubverbindung 16 zusammengehalten werden. Auch hier sind das Dichtelement 1 und der Hohlraum 2 ausserhalb des Dichtelements 1 vorhanden. Die Bohrung 3 aus Fig. 1, die zum Auffüllen der Dichtmasse dient, ist hier der Uebersichtlichkeit halber nicht eingezeichnet. Die Schraubverbindung 16 führt durch ein Durchgangsloch in den beiden Flanschen 4 und 5 und bildet dort einen Bohrungshohlraum 15, der Feuchtigkeit aufnehmen und zur Korrosion der Schraubverbindung 16 selbst beitragen kann. Dieser Bohrungshohlraum 15 ist daher durch einen Kanal 17 mit dem Hohlraum 2 zwischen den Dichtflächen verbunden und, ebenso wie der Hohlraum 2, mit der Dichtmasse ausgefüllt. Auf diese Weise werden neben den Dichtflächen 6, 6a und dem Dichtungselement 1 auch noch die mechanisch beanspruchten Schraubverbindungen 16 vor äusseren Einflüssen geschützt. Der Kanal 17 kann dabei beispielsweise als umlaufende Andrehung ausgebildet sein, die über den gesamten Umfang des unteren Flansches 5 vom Hohlraum 2 zum Durchgangsloch der Schraubverbindung 16 reicht. Weiterhin ist es auch möglich, von jedem Durchgangsloch einen gefrästen Schlitz zum Hohlraum 2 hin vorzusehen.

Fig. 2 zeigt den Querschnitt durch eine Flanschverbindung, die der in Fig. 1 dargestellten ähnlich ist, mit dem Unterschied, dass das Dichtelement 1 nicht in einer Nut liegt, sondern zwischen zwei Zentrierringen 7, 7a, die zur Fixierung des Dichtelementes dienen. Auch in diesem Fall entsteht beim Zusammenbau im wesentlichen ein Hohlraum 2, der durch die Bohrung 3 mit dem Aussenraum verbunden und mit einer Dichtmasse 12 gefüllt ist. In den beiden, in Fig. 1 und Fig. 2 dargestellten Ausführungsbeispielen ist es vorteilhaft, die Bohrung 3 mit einer geeigneten Neigung zu den Dichtflächen 6, 6a durch einen der beiden Flansche auszuführen. Beispielsweise kann der Winkel zwischen der Mittelachse 13 der Bohrung und den Dichtflächen ungefähr $75^{\circ}$ betragen. Dadurch wird gewährleistet, dass der Einsatz der Bohrvorrichtung nicht durch die auf der Seite der Bohrung liegenden Rohr- oder Gehäusewände behindert wird.

Ein weiteres Ausführungsbeispiel für die Flanschdichtung, wie sie häufig in den $SF_6$-isolierten, gekapselten Komponenten der Hochspannungstechnik vorkommt, ist in Fig. 3 dargestellt. Die Flanschverbindung dient gleichzeitig als Halterung für ein innenliegendes Teil 8, z.B. eine Isolierplatte. Die Nuten für die Dichtelemente 1, 1a sind in dieses Teil eingelassen. Zum Schutz vor zu grosser mechanischer Belastung beim Zusammenbau ist Teil 8 von einem Abstands- und Stützring 9 umgeben. Durch diesen Aufbau sind im wesentlichen die Hohlräume 2 und 2a bedingt. Die Bohrung 3 ist bevorzugt parallel zu den Dichtflächen 6, 6a durch den Stützring 9 ausgeführt. Die Hohlräume können so gleichzeitig über den zwischen Stützring 9 und Innenteil 8 gebildeten Stoss mit einer Dichtmasse 12 ausgefüllt werden.

Besonders vorteilhaft ist der Abschluss der Bohrung 3 zum Aussenraum 11 hin mit einem Nippel 14, der mit einem Kugelventil versehen ist und beim Einfüllvorgang als Rückschlagventil wirkt. Zu diesem Zweck kann ein handelsüblicher Schmiernippel verwendet werden, wie er in Fig. 3 dargestellt ist.

Die Figuren 1, 2, 3 und 4 zeigen vier spezielle Beispiele von elastisch gedichteten, nicht stoffschlüssigen Flanschverbindungen, wie sie in der Hochspannungstechnik eingesetzt werden. Die Verwendung der erfindungsgemässen Flanschdichtung ist jedoch nicht auf diese Beispiele beschränkt, sondern erstreckt sich auf eine Vielzahl von Flanschverbindungen mit einem oder mehreren Dichtelementen und anders ausgestalteten Dichtflächen und Zwischenringen. Lage und Art der Bohrungen sowie die erforderlichen Eigenschaften der Dichtmasse können vom Fachmann im Sinne der Erfindung so gewählt werden, dass sich entsprechend den konstruktiven Gegebenheiten der jeweiligen Verbindung eine optimale Dichtigkeit gegenüber äusseren Einwirkungen oder bei der Beseitigung von Undichtigkeiten zum Innenraum 10 hin ergibt.

Durch das erfindungsgemässe Verfahren zur Herstellung der Flanschdichtung kann einerseits die Zuverlässigkeit der Flanschverbindungen erhöht und andererseits kostengünstig eine Reparatur an undichten Anlagen durchgeführt werden. Daher kommt dem Verfahren eine grosse ökonomische Bedeutung insbesondere für den Service von gasisolierten Hochspannungs-Freiluftanlagen zu.

Patentansprüche

1. Flanschdichtung mit zwei Flanschen (4, 5) und zwei im wesentlichen ebenen Dichtflächen (6, 6a), zwischen denen ein elastisches Dichtelement (1) liegt und zwischen denen sich ausserhalb des Dichtelementes (1) ein Hohlraum (2) befindet, dadurch gekennzeichnet, dass eine den Hohlraum (2) mit dem Aussenraum (11) verbindende Bohrung (3) vorgesehen ist und der Hohlraum (2) mit einer Dichtmasse (12) ausgefüllt ist.

2. Flanschdichtung nach Anspruch 1, bei der die Flansche (4, 5) durch eine Schraubverbindung (16) verbunden sind, dadurch gekennzeichnet, dass der Hohlraum (2) über einen Kanal (17) mit einem Bohrungshohlraum (15) zwischen der Schraubverbindung (16) und den Flanschen (4, 5) verbunden ist und der Bohrungshohlraum (15) mit der Dichtmasse ausgefüllt ist.

3. Flanschdichtung nach Anspruch 1, dadurch gekennzeichnet, dass die Bohrung (3) durch einen der Flansche (4, 5) verläuft und die Achse (13) der Bohrung mit den Dichtflächen (6, 6a) einen Winkel von ungefähr $75^{\circ}$ einschliesst.

4. Flanschdichtung nach Anspruch 1, dadurch gekennzeichnet, dass die Bohrung (3) parallel zu den Dichtflächen (6, 6a) durch einen zwischen den Flanschen (4, 5) liegenden Stützring (9) verläuft.

5. Flanschdichtung nach einem der Ansprüche 1-4, dadurch gekennzeichnet, dass die Bohrung (3) im Durchmesser abgestuft ist.

6. Flanschdichtung nach einem der Ansprüche 1-5, dadurch gekennzeichnet, dass die Viskosität der Dichtmasse (12) $\geqq 10$ (Pa·s) ist.

0090436

7. Flanschdichtung nach einem der Ansprüche 1-6, dadurch gekennzeichnet, dass als Dichtmasse (12) Silastic 738 der Firma Dow Corning vorgesehen ist.

8. Flanschdichtung nach einem der Ansprüche 1-7, dadurch gekennzeichnet, dass die Bohrung (3) mit einem Nippel (14) zum Aussenraum (11) hin abgeschlossen ist.

9. Verfahren zur Herstellung einer Flanschdichtung nach einem der Ansprüche 1-8, dadurch gekennzeichnet, dass die Dichtmasse mit einem Druck von maximal 100 bar durch die Bohrung (3) gepresst wird.

10. Anwendung des Verfahrens nach Anspruch 9, zum Abdichten leckgewordener Flanschdichtungen.

FIG.1

FIG.2

≈75°

FIG.3

FIG.4